# EUROPEAN PATENT SPECIFICATION

(11) **EP 3 975 376 B1**
(45) Date of publication and mention of the grant of the patent: **08.07.2026**
(21) Application number: 20808974.8
(22) Date of filing: 13.05.2020
(51) Int. Cl.: H02J 7/00, H02J 50/10, H02J 50/40, H02J 50/00

(54) **WIRELESS CHARGER**
DRAHTLOSES LADEGERÄT
CHARGEUR SANS FIL

(30) Priority: 22.05.2019 CN 201910429016
(43) Date of publication of application: 30.03.2022
(73) Proprietor: Vivo Mobile Communication Co., Ltd., Dongguan, Guangdong 523860 (CN)
(72) Inventor: ZHOU, Ximing, Dongguan, Guangdong 523860 (CN); CHEN, Dong, Dongguan, Guangdong 523860 (CN); WEI, Huabing, Dongguan, Guangdong 523860 (CN)
(74) Representative: Lavoix
(86) International application number: PCT/CN2020/090045
(87) International publication number: WO 2020/233472

(56) References cited:
- CN-A- 102 640 379
- CN-A- 108 233 503
- CN-A- 110 011 389
- CN-U- 206 250 814
- CN-U- 208 433 808
- KR-U- 20180 001 448
- US-A1- 2013 241 478
- US-A1- 2014 035 387
- US-A1- 2014 203 767

## Description

### CROSS-REFERENCE TO RELATED APPLICATION

### TECHNICAL FIELD

Embodiments of the present disclosure relate to the field of wireless charger technologies, and in particular, to a wireless charger.

### BACKGROUND

With continuous development and popularization of smartphones, smartphones have become an indispensable electronic product for everyone. As users frequently use smartphones, having multiple smartphones by a user is becoming a new trend. To improve the convenience of using mobile phones, a growing number of users use wireless chargers to charge mobile phones.

However, a wireless charger in the related art can charge only one mobile phone, and when multiple mobile phones of a user have insufficient power and the user urgently needs to use the mobile phone, how to implement usage of the mobile phone during charging while satisfying the user's need for charging the multiple mobile phones has become a problem needing to be urgently solved.

D1 (US2014/035387 A1) discloses a power supply 10. As shown in FIG. 8, the power supply 10 includes an integrated wireless power transmitter 14, a plurality of wireless transmitter ports 18 for selectively attaching wireless power transmitters 14 and a plurality of power outlet ports 16 for supplying power to word devices. The integrated wireless power transmitter 14 permits at least one wireless device to receive power without the need for attaching a detachable wireless power transmitter. However, if it is desirable to wirelessly charge more than a single wireless device, additional detachable wireless power transmitters may by connected to the power adapter 13, as desired. FIG. 9 shows the power supply 10 of FIG. 8 with an alternative detachable wireless power transmitter 14 configured for use with larger wireless devices, such as laptop L. The power supply 10 of FIG. 9 further includes a longer connector section 30 and a larger support surface 31 housing the coil assembly 32. The support surface 31 of is configured to provide a wide support for devices that might teeter on a smaller support. The coil 20 (along with any desired magnet or shielding) is disposed in a relatively thin, rectangular support surface 31.

D2 (US2013/241478A1) discloses an inductive power transmission platform 100 for accommodating a plurality of primary inductor units 200a, 200b, 200c. The inductive power transmission surface 100 may be incorporated, for example, into a table top for powering or charging electrical devices 320, such as, inter alia, a laptop computer 320a, a mobile phone 320b and a standing lamp 320c, placed thereupon. The transmission platform 100 includes a plurality of power docks 120, into which the primary inductor units 200 are affixable. For high density coverage, the power docks 120 may be arranged in a rectangular or staggered hexagonal (honeycomb) array. Electrical devices 320, such as a computer 320a, mobile telephone 320b or a desk lamp 320c, for example, may be provided with secondary inductors 322 for coupling with the primary inductor units 200 to draw power therefrom.

D3 (US2014/203767A1) discloses an electric induction charger 100 in FIGS. 1 and 2. The electric induction charger 100 comprises a charging body 10, a wire collection disk 20, and an electric wire 30. The charging body 10 has a base 11. The base 11 has a first pivot portion 12 at one side thereof. The first pivot portion 12 is a receiving trough. The base 11 further has a receiving notch 13 and a plug 14 which is pivotally connected in the receiving notch 13. The base 11 further comprises a power conversion unit 15 therein. One end of the power conversion unit 15 is electrically connected to the plug 14, and another end of the power conversion unit 15 is electrically connected to a first coil 16. The wire collection disk 20 has a first side wall 21. The first side wall 21 has a second coil 26 therein. The electric wire 30 surrounds the connection portion 22 along with rotation of the wire collection disk 20 to be collected in the wire collection trough 24. One end of the electric wire 30 is provided with a first connector 31, and the other end of the electric wire 30 is electrically connected to the second coil 26. In this embodiment, the other end of the electric wire 30 is provided with a second connector 32. The second connector 32 is plugged to the connection port 27. Through the connection port 27, the electric wire 30 is electrically connected with the second coil 26.

D4 (KR20180001448U) discloses in FIGS. 1 and 2 a portable terminal holder for a vehicle. The portable terminal holder includes a lower portion 10 and an upper portion 20. The portable terminal holder is configured such that a back surface of the portable terminal 1 is attached to a fastening sucker of the upper portion 20. A charging coil 42 is provided inside the upper part 20 and is connected to the charging coil 2 formed on the back surface of the portable terminal 1. The upper portion 20 and the lower portion 10 are connected to each other by a wire 30 so as to be connected to the wireless terminal 1. It is very convenient to use the mobile terminal 1 and the wireless and wired charging functions at the same time, and the position of the mobile terminal 1 can be changed by the user.

### SUMMARY

Embodiments of the present disclosure provide a wireless charger, so as to solve a problem of how to implement usage of a mobile phone during charging while satisfying a user's need for charging multiple mobile phones.

To solve the foregoing technical problem, the present disclosure is implemented as follows.

An embodiment provides a wireless charger, which is defined in claim 1.

In the foregoing solution of the embodiment of the present disclosure, the first transmitter coil is fixed in the base, the energy radiation member is detachably connected to the base and electrically connected to the base through a wire, the energy radiation member includes the second transmitter coil, and the controller is disposed in the base and connected to the driver circuit. In the case that the energy radiation member and the base are in the separated state, the driver circuit drives, under control of the control signal of the controller, the first transmitter coil and the second transmitter coil to charge a first terminal placed on the energy radiation member and a second terminal placed on the base, respectively. In this way, the wireless charger with the foregoing structure can not only meet a user's demand for using a mobile phone during charging, but also meet the user's demand for charging multiple mobile phones, thereby improving user experience.

### BRIEF DESCRIPTION OF DRAWINGS

FIG. 1 is a first schematic structural diagram of a wireless charger according to an embodiment of the present disclosure; and
FIG. 2 is a second schematic structural diagram of a wireless charger according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure.

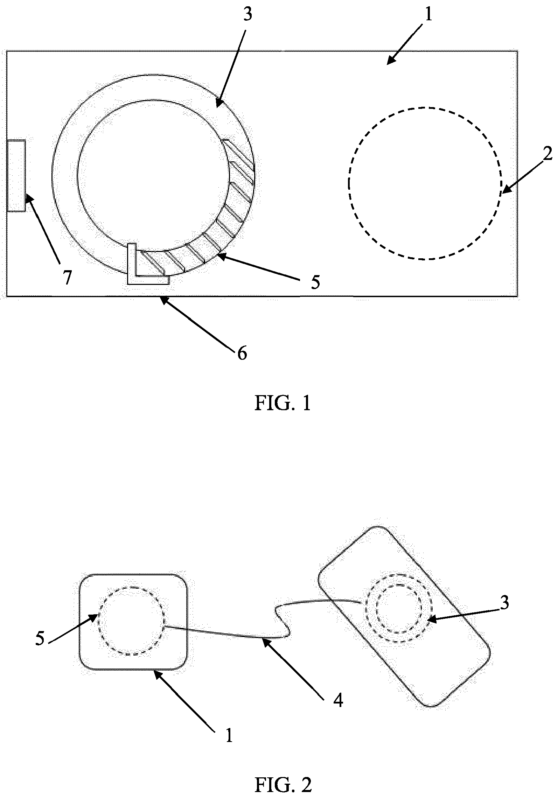

FIG. 1 is a schematic structural diagram of a wireless charger according to an embodiment of the present disclosure. The wireless charger includes: a base 1; a first transmitter coil 2, where the first transmitter coil is fixed in the base 1; a driver circuit (not shown in the figure), where the driver circuit is disposed in the base 1; a controller (not shown in the figure), where the controller is disposed in the base 1 and connected to the driver circuit; and an energy radiation member 3, where the energy radiation member 3 is detachably connected to the base 1 and electrically connected to the base 1 through a wire 4, and the energy radiation member 3 includes a second transmitter coil. In the case that the energy radiation member 3 and the base 1 are in a separated state, the driver circuit drives, under control of a control signal of the controller, the first transmitter coil 2 and the second transmitter coil to charge a first terminal placed on the energy radiation member 3 and a second terminal placed on the base 1. When the energy radiation member (3) is moved away from a surface of the base (1) by a distance greater than a first preset distance, the energy radiation member (3) and the base (1) are in the separated state.

It should be noted that the energy radiation member 3 is detachably connected to the base 1 and electrically connected to the base 1 through the wire 4, which means that the energy radiation member 3 can be separated from the base 1 through the wire 4, as shown in FIG. 2. In other words, the energy radiation member 3 can be moved within an effective range of the wire 4.

It should be noted that, in the case that the energy radiation member 3 and the base 1 are in the separated state, that is, the energy radiation member 3 is moved away from the surface of the base 1 by a distance greater than the first preset distance, the driver circuit drives, under control of a control signal of the controller, the first transmitter coil and the second transmitter coil to operate. In this case, the wireless charger can charge both a first terminal placed on the energy radiation member 3 and a second terminal placed on the base 1. In addition, because the energy radiation member 3 can be moved within the effective range of the wire 4, the user can pick up the energy radiation member 3 to use the first terminal during a charging process of the first terminal. In other words, the wireless charger in this embodiment can not only meet a user's demand for using a mobile phone during charging, but also meet the user's demand for charging multiple mobile phones.

The wireless charger further includes a trigger, where the trigger is disposed on the energy radiation member 3 or the base 1, and is connected to the controller. In the case that the energy radiation member 3 and the base 1 are in the separated state, the trigger generates a first triggering signal, and the controller outputs a first control signal to the driver circuit based on the first triggering signal, so that the driver circuit drives the first transmitter coil 2 and the second transmitter coil to charge the first terminal and the second terminal, respectively. In the case that the energy radiation member 3 and the base 1 are in a non-separated state, the trigger generates a second triggering signal, and controller outputs a second control signal to the driver circuit based on the second triggering signal, so that the driver circuit drives the first transmitter coil 2 to charge the first terminal or the second transmitter coil to charge the second terminal.

It should be noted that, in the case that the trigger is disposed on the energy radiation member 3, the trigger is electrically connected to the controller through the wire 4.

Herein, that the energy radiation member 3 and the base 1 are in the non-separated state includes: the energy radiation member 3 is located on a surface of the base 1 (as shown in FIG. 1), or a distance between the energy radiation member 3 and the base 1 is less than a second preset distance.

Herein, in the case that the energy radiation member 3 and the base 1 are in the non-separated state, the trigger generates the second triggering signal, the controller outputs the second control signal to the driver circuit based on the triggering signal, so that driver circuit drives the first transmitter coil 2 or the second transmitter coil to operate. This aims to reduce standby power consumption. Only one of the first transmitter coil 2 and the second transmitter coil operates, and charges a terminal.

Optionally, the trigger is a pressure-controlled switch; and when the pressure-controlled switch is in an open state, the energy radiation member 3 and the base 1 are in the separated state; or when the pressure-controlled switch is in a closed state, the energy radiation member 3 and the base 1 are in the non-separated state.

In an optional implementation, when pressure on the base 1 is less than a specified value of the pressure-controlled switch, an internal micro switch element can be triggered by using a sensor to be disconnected, that is, the pressure-controlled switch is in the open state. Herein, the pressure-controlled switch is in the open state, which indicates that the energy radiation member 3 is not placed on the surface of the base 1, that is, the energy radiation member 3 is not in contact with the surface of the base 1. In other words, the energy radiation member 3 and the base 1 are in the separated state.

When pressure on the base 1 is greater than a specified value of the pressure-controlled switch, an internal micro switch element can be triggered by using a sensor to be connected, that is, the pressure-controlled switch is in the closed state. Herein, the pressure-controlled switch is in the closed state, which indicates that the energy radiation member 3 is placed on the surface of the base 1, that is, the energy radiation member 3 is in contact with the surface of the base 1. In other words, the energy radiation member 3 and the base are in the non-separated state.

Optionally, the trigger is a distance sensor. In the case that the distance sensor detects that a distance between the energy radiation member 3 and the base 1 is greater than a first preset distance, the energy radiation member 3 and the base 1 are in the separated state. In the case that the distance sensor detects that a distance between the energy radiation member 3 and the base 1 is less than a second preset distance, the energy radiation member 3 and the base 1 are in the non-separated state.

Herein, in the case that the distance sensor detects that the distance between the energy radiation member 3 and the base 1 is greater than the first preset distance, it indicates that the energy radiation member 3 is away from the base 1, that is, the energy radiation member 3 and the base 1 are in the separated state.

Herein, in the case that the distance sensor detects that the distance between the energy radiation member 3 and the base 1 is less than the second preset distance, it indicates that the energy radiation member 3 is close to the base 1, that is, the energy radiation member 3 and the base 1 are in the non-separated state.

Optionally, the distance sensor is an infrared sensor.

In an optional implementation, the driver circuit includes a first driver circuit and a second driver circuit; the first driver circuit is electrically connected to the first transmitter coil 2; the second driver circuit is electrically connected to the second transmitter coil through the wire 4; and both the first driver circuit and the second driver circuit are connected to the controller.

Specifically, in the case that the energy radiation member 3 and the base 1 are in the separated state, the first driver circuit drives, under control of a control signal of the controller, the first transmitter coil 2 to charge the first terminal, and the second driver circuit drives, under control of a control signal of the controller, the second transmitter coil to charge the second terminal.

In the case that the energy radiation member 3 and the base are in the non-separated state, the first driver circuit drives, under control of a control signal of the controller, the first transmitter coil 2 to charge the first terminal, or the second driver circuit drives, under control of a control signal of the controller, the second transmitter coil to charge the second terminal. In other words, the controller controls one of the driver circuits to operate, and the other driver circuit not to operate.

To facilitate storage of the wire 4 between the energy radiation member 3 and the base 1, in an optional implementation, the wireless charger in the present disclosure may further include a cable storage apparatus 5. The cable storage apparatus 5 is disposed in the base 1. The cable storage apparatus 5 includes a rotating shaft, where the wire 4 can be stretched or wound around the rotating shaft.

It should be noted that in a process of charging the terminal through the energy radiation member 3, if the user needs to move the terminal while maintaining a charging state, the user can stretch the wire 4 stored in the cable storage apparatus 5 by using rotating shaft in the cable storage apparatus 5 when picking up the energy radiation member 3. After the terminal is moved, the wire 4 in the cable storage apparatus 5 can be stretched freely, as shown in FIG. 2. In this way, the user can move the terminal within an effective range of the wire 4.

In addition, to quickly and automatically store the freely stretched wire 4 into the cable storage apparatus 5, optionally, the cable storage apparatus may further include: a motor connected to the rotating shaft and a switch. The switch is configured to control starting or stopping of the motor.

Specifically, when the user moves out the terminal placed on the energy radiation member 3 to stop charging, the motor can be controlled by a switch to start, and the motor drives the rotating shaft to rotate, so that the wire 4 is wound on the rotating shaft and shrunk in the cable storage apparatus 5.

Optionally, the energy radiation member 3 further includes a housing, the second transmitter coil is fixed in the housing, and a first connecting member is disposed on a surface of the housing.

An objective of arranging the first connecting member on the surface of the housing is to securely fasten the terminal on the energy radiation member 3 when the terminal is charged through the energy radiation member 3. Herein, optionally, the first connecting member is a sucker.

It should be further noted that the sucker disposed on the surface of the housing can absorb a surface of a housing or a leather case of a terminal, such as a mobile phone, and further facilitate use of the mobile phone by the user while charging the mobile phone through the energy radiation member 3.

To facilitate the fastening or pickup of the energy radiation member 3 on the base 1, optionally, the wireless charger in the present disclosure may further include a second connecting member 6. The energy radiation member 3 is detachably connected to the base 1 through the second connecting member 6.

Optionally, the second connecting member 6 is a buckle.

As shown in FIG. 1, the second connecting member 6 may be further used as a switch for stretching and moving the wire 4. Specifically, when the energy radiation member 3 is fastened onto the base 1 through the second connecting member 6, the second connecting member 6 is used as a switch for stretching and moving the wire 4 and the switch is turned off, which can prevent the energy radiation member 3 from moving through the wire 4. When the energy radiation member 3 is moved away from base 1 through the second connecting member 6, the second connecting member 6 is used as a switch for stretching and moving the wire 4 and the switch is turned on, so that the wire 4 can be stretched and moved.

Optionally, the wireless charger in the present disclosure may further include a power supply circuit (not shown in the figure) disposed in the base 1, and the power supply circuit includes the driver circuit.

Optionally, the wireless charger in the present disclosure may further include a charging interface 7. The charging interface is disposed on the base, and the charging interface 7 is connected to the power supply circuit.

Herein, the charging interface 7 is configured to connect to an external adapter.

According to the wireless charger provided in the embodiments of the present disclosure, the first transmitter coil is fixed in the base, the energy radiation member is detachably connected to the base and electrically connected to the base through a wire, the energy radiation member includes the second transmitter coil, and the controller is disposed in the base and connected to the driver circuit. In the case that the energy radiation member and the base are in the separated state, the driver circuit drives, under control of the control signal of the controller, the first transmitter coil and the second transmitter coil to charge the first terminal placed on the energy radiation member and the second terminal placed on the base, respectively. In this way, the wireless charger with the foregoing structure can not only meet a user's demand for using a mobile phone during charging, but also meet the user's demand for charging multiple mobile phones, thereby improving user experience.
The embodiments of the present disclosure are described above with reference to the accompanying drawings, but the present disclosure is not limited to the foregoing specific implementations. The foregoing specific implementations are merely illustrative but not restrictive. In view of the present disclosure, a person of ordinary skill in the art may make many modifications, which fall within the protection of the annexed claims.

## Claims

1. A wireless charger, comprising:
a base (1);
a first transmitter coil (2), wherein the first transmitter coil (2) is fixed in the base (1);
a driver circuit, wherein the driver circuit is disposed in the base (1);
a controller, wherein the controller is disposed in the base (1) and connected to the driver circuit; and
an energy radiation member (3), wherein the energy radiation member (3) is detachably connected to the base (1) and electrically connected to the base (1) through a wire (4), and the energy radiation member (3) comprises a second transmitter coil, wherein
in a case that the energy radiation member (3) and the base (1) are in a separated state, the driver circuit drives, under control of a control signal from the controller, the first transmitter coil (2) and the second transmitter coil to charge a first terminal placed on the energy radiation member (3) and a second terminal placed on the base (1), respectively; and
when the energy radiation member (3) is moved away from a surface of the base (1) by a distance greater than a first preset distance, the energy radiation member (3) and the base (1) are in the separated state;
wherein the wireless charger further comprises:
a trigger, wherein the trigger is disposed on the energy radiation member (3) or the base (1), and is connected to the controller, wherein
in the case that the energy radiation member (3) and the base (1) are in the separated state, the trigger generates a first triggering signal, and the controller outputs a first control signal to the driver circuit based on the first triggering signal, so that the driver circuit drives the first transmitter coil (2) and the second transmitter coil to charge the first terminal and the second terminal, respectively; or
in a case that the energy radiation member (3) and the base (1) are in a non-separated state, the trigger generates a second triggering signal, and the controller outputs a second control signal to the driver circuit based on the second triggering signal, so that the driver circuit drives the first transmitter coil (2) to charge the first terminal or the second transmitter coil to charge the second terminal.

2. The wireless charger according to claim 1, wherein the trigger is a pressure-controlled switch, wherein
when the pressure-controlled switch is in an open state, the energy radiation member (3) and the base (1) are in the separated state; or
when the pressure-controlled switch is in a closed state, the energy radiation member (3) and the base (1) are in the non-separated state.

3. The wireless charger according to claim 1, wherein the trigger is a distance sensor, wherein
in a case that the distance sensor detects that a distance between the energy radiation member (3) and the base (1) is greater than a first preset distance, the energy radiation member (3) and the base (1) are in the separated state; or
in a case that the distance sensor detects that a distance between the energy radiation member (3) and the base (1) is less than a second preset distance, the energy radiation member (3) and the base (1) are in the non-separated state.

4. The wireless charger according to claim 1, wherein the driver circuit comprises a first driver circuit and a second driver circuit;
the first driver circuit is electrically connected to the first transmitter coil (2);
the second driver circuit is electrically connected to the second transmitter coil through the wire (4); and
both the first driver circuit and the second driver circuit are connected to the controller.

5. The wireless charger according to claim 1, further comprising:
a cable storage apparatus (5), wherein the cable storage apparatus (5) is disposed in the base (1), and the cable storage apparatus (5) comprises a rotating shaft, wherein
the wire (4) can be stretched or wound around the rotating shaft.

6. The wireless charger according to claim 1, wherein the energy radiation member (3) further comprises a housing, the second transmitter coil is fixed in the housing, and a first connecting member is disposed on a surface of the housing.

7. The wireless charger according to claim 1, further comprising a second connecting member (6), wherein
the energy radiation member (3) is detachably connected to the base (1) through the second connecting member (6).

8. The wireless charger according to claim 1, further comprising:
a power supply circuit, wherein the power supply circuit is disposed in the base (1), and the power supply circuit comprises the driver circuit.

9. The wireless charger according to claim 8, further comprising:
a charging interface (7), wherein the charging interface (7) is disposed on the base (1), and
the charging interface (7) is connected to the power supply circuit.

## Patentansprüche

1. Drahtloses Ladegerät, umfassend:
eine Basis (1);
eine erste Übertragungsspule (2), wobei die erste Übertragungsspule (2) in der Basis (1) befestigt ist;
eine Ansteuerungsschaltung, wobei die Ansteuerungsschaltung in der Basis (1) angeordnet ist;
eine Steuerung, wobei die Steuerung in der Basis (1) angeordnet und mit der Ansteuerungsschaltung verbunden ist; und
ein Energiestrahlungselement (3), wobei das Energiestrahlungselement (3) abnehmbar mit der Basis (1) verbunden ist und über einen Draht (4) elektrisch mit der Basis (1) verbunden ist, und das Energiestrahlungselement (3) eine zweite Übertragungsspule umfasst, wobei
in einem Fall, in dem das Energiestrahlungselement (3) und die Basis (1) in einem getrennten Zustand sind, die Ansteuerungsschaltung unter Steuerung eines Steuersignals von der Steuerung die erste Übertragungsspule (2) und die zweite Übertragungsspule ansteuert, um jeweils einen ersten Anschluss, der an dem Energiestrahlungselement (3) platziert ist, und einen zweiten Anschluss, der an der Basis (1) platziert ist, zu laden; und
wenn das Energiestrahlungselement (3) mehr als einen ersten voreingestellten Abstand weg von einer Oberfläche der Basis (1) entfernt wird, das Strahlungselement (3) und die Basis (1) in dem getrennten Zustand sind;
wobei das drahtlose Ladegerät ferner Folgendes umfasst:
einen Auslöser, wobei der Auslöser an dem Energiestrahlungselement (3) oder der Basis (1) angeordnet ist und mit der Steuerung verbunden ist, wobei
in einem Fall, in dem das Energieabstrahlungselement (3) und die Basis (1) in dem getrennten Zustand sind, der Auslöser ein erstes Auslösesignal erzeugt und die Steuerung basierend auf dem ersten Auslösesignal ein erstes Steuersignal an die Ansteuerungsschaltung ausgibt, sodass die Ansteuerungsschaltung die erste Übertragungsspule (2) und die zweite Übertragungsspule ansteuert, um jeweils den ersten Anschluss und den zweiten Anschluss zu laden; oder
in einem Fall, in dem das Energiestrahlungselement (3) und die Basis (1) in einem nicht getrennten Zustand sind, der Auslöser ein zweites Auslösesignal erzeugt, und die Steuerung basierend auf dem zweiten Auslösesignal ein zweites Steuersignal an die Ansteuerungsschaltung ausgibt, sodass die Ansteuerungsschaltung die erste Übertragungsspule (2), um den ersten Anschluss zu laden, oder die zweite Übertragungsspule, um den zweiten Anschluss zu laden, ansteuert.

2. Drahtloses Ladegerät nach Anspruch 1, wobei der Auslöser ein druckgesteuerter Schalter ist, wobei
wenn der druckgesteuerte Schalter in einem offenen Zustand ist, der Energieabstrahler (3) und die Basis (1) in einem getrennten Zustand sind; oder
wenn der druckgesteuerte Schalter in einem geschlossenen Zustand ist, das Energieabstrahlungselement (3) und die Basis (1) in einem nicht getrennten Zustand sind.

3. Drahtloses Ladegerät nach Anspruch 1, wobei der Auslöser ein Abstandssensor ist, wobei
in einem Fall, in dem der Abstandssensor erfasst, dass ein Abstand zwischen dem Energiestrahlungselement (3) und der Basis (1) größer ist als ein erster voreingestellter Abstand, das Energiestrahlungselement (3) und die Basis (1) in dem getrennten Zustand sind; oder
in einem Fall, in dem der Abstandssensor erfasst, dass der Abstand zwischen dem Energiestrahlungselement (3) und der Basis (1) kleiner ist als der zweite voreingestellte Abstand, das Energiestrahlungselement (3) und die Basis (1) in dem nicht getrennten Zustand sind.

4. Drahtloses Ladegerät nach Anspruch 1, wobei die Ansteuerungsschaltung eine erste und eine zweite Ansteuerungsschaltung umfasst;
die erste Ansteuerungsschaltung elektrisch mit der ersten Übertragungsspule (2) verbunden ist;
die zweite Ansteuerungsschaltung über den Draht (4) elektrisch mit der zweiten Übertragungsspule verbunden ist; und
sowohl die erste Ansteuerungsschaltung als auch die zweite Ansteuerungsschaltung mit der Steuerung verbunden sind.

5. Drahtloses Ladegerät nach Anspruch 1, ferner umfassend:
eine Kabelaufbewahrungsvorrichtung (5), wobei die Kabelaufbewahrungsvorrichtung (5) in der Basis (1) angeordnet ist und die Kabelaufbewahrungsvorrichtung (5) eine drehende Welle umfasst, wobei
der Draht (4) um die drehende Welle gespannt oder gewickelt werden kann.

6. Drahtloses Ladegerät nach Anspruch 1, wobei das Energieabstrahlungselement (3) ferner ein Gehäuse umfasst, die zweite Übertragungsspule in dem Gehäuse befestigt ist, und ein erstes Verbindungselement an einer Oberfläche des Gehäuses angeordnet ist.

7. Drahtloses Ladegerät nach Anspruch 1, ferner umfassend ein zweites Verbindungselement (6), wobei
das Energieabstrahlungselement (3) über das zweite Verbindungselement (6) lösbar mit der Basis (1) verbunden ist.

8. Drahtloses Ladegerät nach Anspruch 1, ferner umfassend:
eine Stromversorgungsschaltung, wobei die Stromversorgungsschaltung in der Basis (1) angeordnet ist und die Ansteuerungsschaltung umfasst.

9. Drahtloses Ladegerät nach Anspruch 8, ferner umfassend:
eine Ladeschnittstelle (7), wobei die Ladeschnittstelle (7) an der Basis (1) angeordnet ist, und
die Ladeschnittstelle (7) mit der Stromversorgungsschaltung verbunden ist.

## Revendications

1. Chargeur sans fil, comprenant :
une base (1) ;
une première bobine émettrice (2), dans lequel la première bobine émettrice (2) est fixée dans la base (1) ;
un circuit d'excitation, dans lequel le circuit d'excitation est disposé dans la base (1) ;
un dispositif de commande, dans lequel le dispositif de commande est disposé dans la base (1) et connecté au circuit d'excitation ; et
un élément de rayonnement d'énergie (3), dans lequel l'élément de rayonnement d'énergie (3) est connecté de manière amovible à la base (1) et connecté électriquement à la base (1) par un fil (4), et l'élément de rayonnement d'énergie (3) comprend une seconde bobine émettrice, dans lequel
dans un cas où l'élément de rayonnement d'énergie (3) et la base (1) se trouvent dans un état séparé, le circuit d'excitation excite, sous le contrôle d'un signal de commande provenant du dispositif de commande, la première bobine d'émission (2) et la seconde bobine d'émission pour charger une première borne placée sur l'élément de rayonnement d'énergie (3) et une seconde borne placée sur la base (1), respectivement ; et
lorsque l'élément de rayonnement d'énergie (3) est éloigné d'une surface de la base (1) d'une distance supérieure à une première distance prédéfinie, l'élément de rayonnement d'énergie (3) et la base (1) se trouvent dans l'état séparé ;
dans lequel le chargeur sans fil comprend en outre :
un déclencheur, dans lequel le déclencheur est disposé sur l'élément de rayonnement d'énergie (3) ou la base (1), et est connecté au dispositif de commande, dans lequel
dans le cas où l'élément de rayonnement d'énergie (3) et la base (1) se trouvent dans l'état séparé, le déclencheur génère un premier signal de déclenchement, et le dispositif de commande émet un premier signal de commande vers le circuit d'excitation sur la base du premier signal de déclenchement, de sorte que le circuit d'excitation excite la première bobine émettrice (2) et la seconde bobine émettrice pour charger la première borne et la seconde borne, respectivement; ou
dans un cas où l'élément de rayonnement d'énergie (3) et la base (1) se trouvent dans un état non séparé, le déclencheur génère un second signal de déclenchement, et le dispositif de commande émet un second signal de commande vers le circuit d'excitation sur la base du second signal de déclenchement, de sorte que le circuit d'excitation excite la première bobine émettrice (2) pour charger la première borne ou la seconde bobine émettrice pour charger la seconde borne.

2. Chargeur sans fil selon la revendication 1, dans lequel le déclencheur est un pressostat, dans lequel
lorsque le pressostat se trouve dans un état ouvert, l'élément de rayonnement d'énergie (3) et la base (1) se trouvent dans l'état séparé ; ou
lorsque le pressostat se trouve dans un état fermé, l'élément de rayonnement d'énergie (3) et la base (1) se trouvent dans l'état non séparé.

3. Chargeur sans fil selon la revendication 1, dans lequel le déclencheur est un capteur de distance, dans lequel
dans un cas où le capteur de distance détecte qu'une distance entre l'élément de rayonnement d'énergie (3) et la base (1) est supérieure à une première distance prédéfinie, l'élément de rayonnement d'énergie (3) et la base (1) se trouvent dans l'état séparé ; ou
dans un cas où le capteur de distance détecte qu'une distance entre l'élément de rayonnement d'énergie (3) et la base (1) est inférieure à une seconde distance prédéfinie, l'élément de rayonnement d'énergie (3) et la base (1) se trouvent dans l'état non séparé.

4. Chargeur sans fil selon la revendication 1, dans lequel le circuit d'excitation comprend un premier circuit d'excitation et un second circuit d'excitation ;
le premier circuit d'excitation est connecté électriquement à la première bobine émettrice (2);
le second circuit d'excitation est connecté électriquement à la seconde bobine émettrice par l'intermédiaire du fil (4) ; et
le premier circuit d'excitation et le second circuit d'excitation sont tous deux connectés au dispositif de commande.

5. Chargeur sans fil selon la revendication 1, comprenant en outre :
un appareil de stockage de câble (5), dans lequel l'appareil de stockage de câble (5) est disposé dans la base (1), et l'appareil de stockage de câble (5) comprend un arbre rotatif, dans lequel
le fil (4) peut être tendu ou enroulé autour de l'arbre rotatif.

6. Chargeur sans fil selon la revendication 1, dans lequel l'élément de rayonnement d'énergie (3) comprend en outre un boîtier, la seconde bobine émettrice est fixée dans le boîtier, et un premier élément de connexion est disposé sur une surface du boîtier.

7. Chargeur sans fil selon la revendication 1, comprenant en outre un second élément de connexion (6), dans lequel
l'élément de rayonnement d'énergie (3) est connecté de manière amovible à la base (1) par l'intermédiaire du second élément de connexion (6).

8. Chargeur sans fil selon la revendication 1, comprenant en outre :
un circuit d'alimentation, dans lequel le circuit d'alimentation est disposé dans la base (1), et le circuit d'alimentation comprend le circuit d'excitation.

9. Chargeur sans fil selon la revendication 8, comprenant en outre :
une interface de recharge (7), dans lequel l'interface de recharge (7) est disposée sur la base (1), et l'interface de recharge (7) est connectée au circuit d'alimentation.
